# EUROPEAN PATENT SPECIFICATION

(11) **EP 3 107 194 B1**
(45) Date of publication and mention of the grant of the patent: **28.11.2018**
(21) Application number: 15382330.7
(22) Date of filing: 19.06.2015
(51) Int. Cl.: H02K 3/52, H02K 15/00, H02K 3/48

(54) **SUPPORTING DEVICE AND METHOD FOR SUPPORTING WINDING COILS IN A WIND TURBINE GENERATOR**
UNTERSTÜTZUNGSVORRICHTUNG UND VERFAHREN ZUR UNTERSTÜTZUNG VON WICKELSPULEN IN EINEM WINDTURBINENGENERATOR
DISPOSITIF DE SUPPORT ET PROCÉDÉ DE SUPPORT DE BOBINES D'ENROULEMENT DANS UN GÉNÉRATEUR DE TURBINE ÉOLIENNE

(43) Date of publication of application: 21.12.2016
(73) Proprietor: GE Renewable Technologies Wind B.V., 4817 PA Breda (NL)
(72) Inventor: CORTADA ACOSTA, Pere, 08195 SANT CUGAT DEL VALLÈS (ES); MUÑIZ CASAIS, César, 08552 TARADELL (ES)
(74) Representative: ZBM Patents - Zea, Barlocci & Markvardsen

(56) References cited:
- EP-A2- 1 215 801
- US-A- 4 812 695
- US-A- 5 973 432

## Description

The present disclosure relates to devices and methods for supporting winding coils in a wind turbine generator.

### BACKGROUND

Common rotating electrical machines, such as wind turbine generators, include a stator core with a number of stator core slots arranged around a circumference and adapted to receive stator coil windings to form a winding coil capable of generating a back electromagnetic force due to the magnetic flux generated by a rotor excitation device. A rotor is coaxially provided either within or outside the stator core such that a gap is defined between the rotor and stator core.

The coil windings are typically retained into the stator core slots through the use of wedges fitted in the slots. Since clearances in the slots may increase over time, flexible ripple springs are used in addition to the wedges.

Document US5325008 refers to the use of systems to retain coil windings into the stator slots by means of sets of wedges. Additionally, rigid filler strips and ripple springs are held between the wedges and the coil windings to fill the radial space between them. Said ripple springs are compressed in a substantially flattened condition and bonded to the rigid filler strips through an adhesive. The ripple spring are thus compressed from a relaxed state into a constrained spring-loaded state. The filler strips and the ripple springs adhered to each other are inserted into the slots in the space between the wedge and the coil winding and the temperature in the slot is raised such that the adhesive is broken whereby the spring expands to load the winding in the slot.

Document US5973432 discloses an elastic member inserted and mounted into the open slot and is then engaged with and fixed to the adjacent portions of the armature core. Document US4812695 discloses locking wedges interposed between the poles having locking edges in the opposed notches and curve inwardly into clamping engagement with the two adjacent coil ends.

Prior art solutions for compensating for the increase of clearances in the slots are relied upon the use of a number of different parts such as wedges, filler strips and ripple springs. This results in a cumbersome, complex and costly devices and process installation methods.

### SUMMARY

A supporting device for supporting winding coils in a wind turbine generator is disclosed herein according to claim 1 comprising a flexible member that is adapted to be attached between two adjacent stator portions. Before attachment, that is, before being inserted between two adjacent stator portions, the flexible member is in a relaxed configuration, i.e. in an uncompressed condition. Once the flexible member has been properly inserted between two adjacent stator portions, the flexible member is in an operating configuration, i.e. in a compressed condition, that is, the flexible member is compressed by the stator portions and the winding coils of the wind turbine generator, applying a force on the winding coils for retaining them into slots formed in the stator core of the generator.
The winding coils are thus efficiently supported in the stator core of the generator through a simple, lightweight and small supporting device which is very easy to install and economical to manufacture. The present supporting device actively supports the winding coils fixed in position and allows vibrations to be efficiently minimized by applying a force on the winding coils while, in turn, prevents the winding coils from falling down.
The flexible member may be for example a leaf spring made of a flexible and/or elastic material such as for example fiberglass or similar, suitable for applying a force to the winding coils as stated above for fixing or retaining them into the stator core slots. The present support device is preferably adapted to be fitted between stator portions without interfering the air gap between the generator rotor and the generator stator.

In the above mentioned relaxed configuration or uncompressed condition of the flexible member before it is inserted between two adjacent stator portions, the flexible member may have a substantially concave configuration. A substantially concave configuration means herein that flexible member has a shape that is rounded, curved or arched inward like the inside of a circle or sphere.

In the above mentioned operating configuration or compressed condition of the flexible member once it has been inserted between two adjacent stator portions, the flexible member may have a substantially flattened configuration. A substantially flattened configuration means herein that the flexible member has a substantially flat shape, with no slopes or curvatures.

The supporting device further comprises a pre-tensioning tool for bringing the flexible member into a configuration allowing it to be inserted between two adjacent stator portions. The pre-tensioning tool is suitable to be applied to the flexible member such that the flexible member is deformed elastically into an inserting configuration allowing the flexible member to be arranged between two adjacent stator portions before reaching a final, operating position.
In the above mentioned inserting configuration of the flexible member for allowing it to be inserted between two adjacent stator portions, the flexible member may have a substantially convex configuration. A substantially convex configuration means herein that the flexible member has a shape that is rounded, curved or arched outward like the exterior of a circle or sphere.

In any case, the inserting configuration is substantially opposed to the relaxed configuration while the operating configuration is an intermediate condition between the relaxed configuration and the inserting configuration.
In one example, the pre-tensioning tool may comprise two separate walls and a tightening element. The tightening element is arranged such that as it is tightened to the flexible member, the separate walls of the tool push on opposite edges of the flexible member tending to bring it into the above mentioned inserting configuration allowing the flexible member to be inserted between the stator portions.
The tightening element of the pre-tensioning tool may be for example a screw adapted to be screwed on a winding coil coupling portion of the flexible member. As the screw of the pre-tensioning tool is screwed on such winding coil coupling portion of the flexible member, the walls of the pre-tensioning tool push on the flexible member to bring it into the inserting configuration.

The above mentioned coupling portion of the flexible member may be adapted to be at least partially inserted into a gap formed between adjacent winding coils when in the operating configuration. Such winding coil coupling portion may be adapted to be always in contact with adjacent winding coils when in the operating configuration. For this purpose, it may be configured in a number of different ways. For example, the winding coil coupling portion may be movable with respect to the stator portions to adapt to the gap between adjacent winding coils. In a further example, the winding coil coupling portion may have at least one projection extending outwards to adapt to the gap between adjacent winding coils.
A method for supporting winding coils in a wind turbine generator may be carried out according to claim 11 using the above supporting device as follows.
Specifically, one or more of the above described supporting devices are provided each comprising a flexible member in the relaxed configuration. Then, the flexible member is arranged into an inserting configuration so that it can be inserted between two adjacent stator portions.
The inserting configuration of the flexible member can be obtained by applying the above described pre-tensioning tool. The pre-tensioning tool is applied to the flexible member and tightened thereto causing the separate walls of the tool to push on opposite edges of the flexible member until the inserting configuration is reached. In such inserting configuration, the flexible member can be inserted between two adjacent stator portions.
Afterwards, the pre-tensioning tool is untightened from the flexible member causing its separate walls to move away from the opposite edges of the flexible member until an operating configuration of the flexible member is reached. In such operating configuration, the flexible member is compressed by the stator portions and the winding coils, remaining in contact with the winding coils of the generator.
The flexible member thus remains attached to regions of the stator teeth comprising an attaching portion such as a recess for receiving the flexible member.

Once the supporting device has been properly fitted between adjacent stator portions supporting the winding coils of the generator, the pre-tensioning tool can be finally removed from the flexible member.

With the above supporting device important advantages are achieved in terms of cost reduction in manufacturing and assembly while obtaining an efficient means for supporting winding coils in a wind turbine generator which is flexible and adaptable to the dimensional tolerances of the winding coils.

A further important advantage of the present supporting device is that a number of air channels are created between the winding coils and the supporting device itself through which air is allowed to pass. This advantageously enhances cooling of the generator.

Additional objects, advantages and features of examples of the present supporting device will become apparent to those skilled in the art upon examination of the description, or may be learned by practice thereof.

### BRIEF DESCRIPTION OF THE DRAWINGS

Particular examples of the present supporting device will be described in the following by way of non-limiting examples, with reference to the appended drawings, in which:
Figure 1 is a sectional elevation of one example of a supporting device in a relaxed configuration;
Figure 2 is a sectional elevation of the example of the supporting device in an inserting configuration before being inserted between two adjacent stator portions and provided with a pre-tensioning tool applied thereto;
Figure 3 is a sectional elevation of the example of the supporting device in an operating configuration already inserted between two adjacent stator portions with the pre-tensioning tool being removed from the supporting device;
Figure 4 is a sectional elevation of the example of the supporting device in which the flexible member and the winding coil coupling portion are separate pieces;
Figure 5 is a sectional elevation of the example of the supporting device in which the winding coil coupling portion comprises projecting portions; and
Figure 6 is a sectional elevation of the example of the supporting device in which the flexible member is movably coupled to the stator portion.

### DETAILED DESCRIPTION OF EXAMPLES

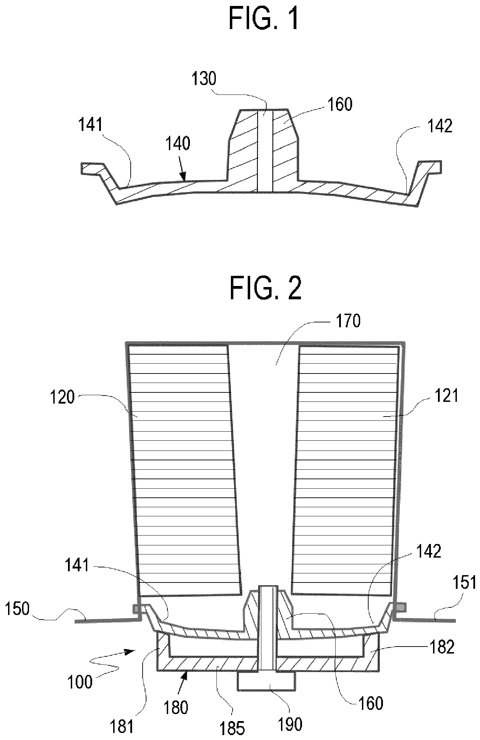

In the figures, the supporting device has been indicated by reference numeral 100 as a whole. The supporting device 100 is intended for supporting winding coils 120, 121 in a wind turbine generator. The winding coils 120, 121 are shown in figures 2-6 of the drawings.

According to the examples shown in the figures, the supporting device 100 comprises a flexible member 140 which in the example shown is a leaf spring made of a flexible and/or elastic material such as fiberglass or similar. Other materials are also possible as long as the flexible member 140 may be elastically deformed for being inserted between two adjacent stator portions 150, 151 while applying a force to the winding coils 120, 121 for fixing or retaining them into slots formed in the stator core of the generator (not shown). The support device 100 is adapted to be fitted between stator portions 150, 151 without interfering the air gap between the generator rotor and the generator stator (not shown).

Before the flexible member 140 is inserted between two adjacent stator portions 150, 151, the flexible member 140 is in a relaxed configuration as shown in figure 1, that is, in an uncompressed condition. In this condition, the flexible member 140 has a substantially concave configuration, that is, a configuration in which the flexible member 140 is curved inward like the inside of a circle or sphere as shown in figure 1.

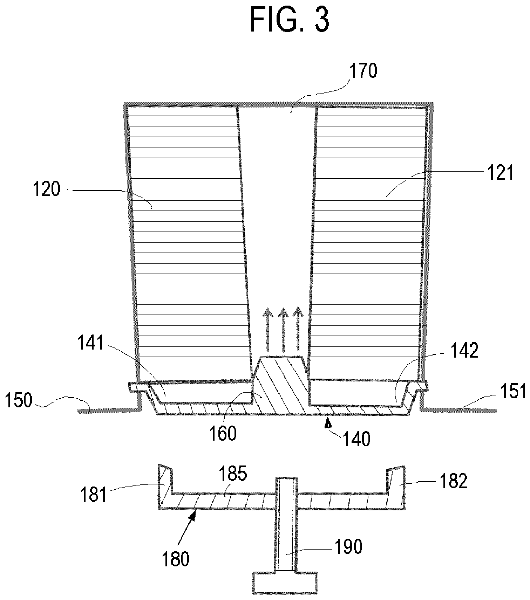

As shown in figures 2 and 3 of the drawings, the supporting device 100 further comprises a pre-tensioning tool 180. The pre-tensioning tool 180 comprises a base 185 with separate walls 181, 182 and a tightening element 190. In the non limiting example of the pre-tensioning tool 180 shown in figures 2 and 3 of the drawings, the tightening element comprises a screw 190 although other tightening means are possible. The screw 190 is adapted to be screwed on a threaded hole 130 formed in a winding coil coupling portion 160 of the flexible member 140. Thus, as the screw 190 is screwed on said threaded hole 130 of the flexible member 140, the base 185 of the pre-tensioning tool 180 approaches the flexible member 140 and its separate walls 181, 182 push on the flexible member 140. This deforms the flexible member 140 bringing it into the inserting configuration shown in figure 2 in which the flexible member 140 has a substantially convex configuration, that is, curved outward like the exterior of a circle or sphere as shown in figure 2, such that it can be arranged between two adjacent stator portions 150, 151.

After the flexible member 140 has been inserted between the two adjacent stator portions 150, 151, the flexible member 140 is in an operating configuration as shown in figure 3, that is, in a compressed condition. Specifically, in this condition the flexible member 140 is compressed by the stator portions 150, 151 and the winding coils 120, 121 of the wind turbine generator. In this compressed condition of the flexible member 140, the winding coils 120, 121 are actively supported in position while vibrations are reduced as a force is applied thereon by the flexible member 140 that is inserted in between. The winding coils 120, 121 are in turn prevented from falling down by the flexible member 140. In this operating configuration shown in figure 3, the flexible member 140 has a substantially flattened configuration, that is, a configuration in which the flexible member 140 is substantially flat, with no slopes or curvatures. Finally, in said operating configuration of the supporting device 100 shown in figure 3, a number of air channels are created between the winding coils 120, 121 and the flexible member 140. Air is allowed to pass through such channels enhancing cooling of the generator.

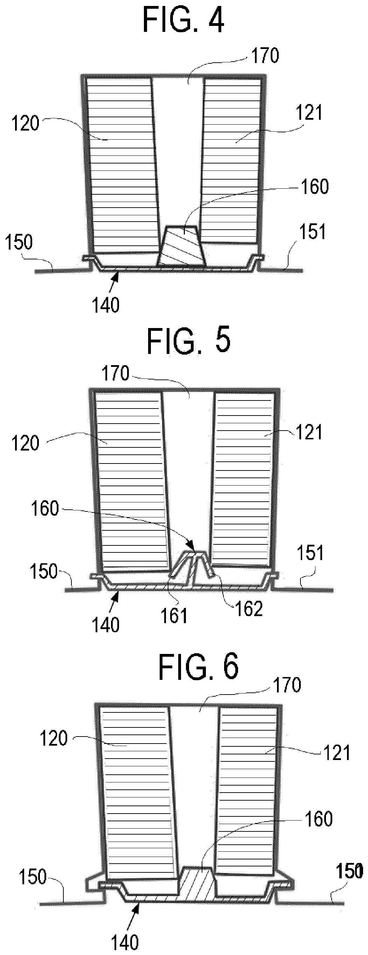

The above mentioned winding coil coupling portion 160 of the flexible member 140 may be adapted to be at least partially inserted into a gap 170 formed between adjacent winding coils 120, 121 when the flexible member 140 is in the operating configuration as shown in figure 3. Said winding coil coupling portion 160 may be adapted to be always in contact with adjacent winding coils 120, 121. Figures 4-6 show examples of winding coil coupling portions 160 for achieving this. In the example shown in figure 4, the winding coil coupling portion 160 is a separate piece from the flexible member 140 which provides a self-centring feature of the coupling portion 160 with respect to the winding coils 120, 121. In the example of figure 5, the winding coil coupling portion 160 has projections 161, 162 extending outwards from the coupling portion 160 to the adjacent winding coils 121, 122 to adapt to the gap 170. In the example shown in figure 6, the supporting device 100, which comprises a flexible member 140 and a winding coil coupling portion 160, is movable with respect to the stator portions 150, 151, so that the winding coil coupling portion 160 can adapt to the gap 170.

For supporting winding coils 120, 121 in the stator of a wind turbine generator, a number of the above described supporting devices 100 may be provided with their flexible member 140 in the relaxed, uncompressed configuration as shown in figure 1. A pre-tensioning tool 180 is applied to the flexible members 140 in order to bring them into the inserting configuration shown in figure 2. For this purpose, the screw 190 of the pre-tensioning tool 180 is screwed on the threaded hole 130 of the coupling portion 160 of the flexible member 140, thus causing the separate walls 181, 182 of the tool 180 to push on corresponding opposite edges 141, 142 of the flexible member 140 so that the flexible member 140 is elastically deformed into the inserting configuration shown in figure 2. In such inserting configuration, the flexible member 140 has a substantially convex configuration and can be inserted between adjacent stator portions 150, 151.

Then, the screw 190 of the pre-tensioning tool 180 is untightened from the threaded hole 130 of the coupling portion 160 of the flexible member 140 such that the separate walls 181, 182 of the tool 180 move away from the flexible member until the operating configuration shown in figure 3 is reached. In this configuration, the flexible member 140 is compressed by the stator portions 150, 151 and the winding coils 120, 121 so that it comes into contact with winding coils 120, 121.

Finally, the pre-tensioning tool 180 is removed from the flexible member 140 once properly fitted between the adjacent stator portions 150, 151.

In some cases, the pre-tensioning tool 180 could be left in the supporting device 100 with the screw 190 partially or totally unscrewed. This could be useful for example to adjust the degree of deformation of the flexible member 140 of the supporting device 100 over the time, if required.

Although only a number of particular examples of the present supporting device for supporting winding coils in a wind turbine generator have been disclosed herein, it will be understood by those skilled in the art that other alternative examples and/or uses and obvious modifications and equivalents thereof are possible.

For example, although the present supporting device has been described as suitable for wind turbine generators, the present supporting device may however be also applied to any other types of rotating electrical machines. Also, although the flexible member has been described in one example as a leaf spring made of a flexible and/or elastic material, other types of flexible members could be used as long as a suitable force is applied to the winding coils for retaining them in position in the stator core.

The present disclosure thus covers all possible combinations of the particular examples described and should not be limited by particular examples, but should be determined only by a fair reading of the claims that follow.

## Claims

1. A supporting device (100) for supporting winding coils (120, 121) in a wind turbine generator, the device (100) comprising a flexible member (140) adapted to be attached between two adjacent stator portions (150, 151) of a stator core, the flexible member (140) being in a relaxed configuration before being inserted between two adjacent stator portions (150, 151), and the flexible member (140) being in an operating configuration when inserted between two adjacent stator portions (150, 151) in which the flexible member (140) is compressed by the stator portions (150, 151) and the winding coils (120, 121), applying a force on the winding coils for retaining them into slots formed in the stator core, **characterized in that** it further comprises a pre-tensioning tool (180) that can be applied to the flexible member (140) for bringing it into an inserting configuration by compressing it such that the flexible member (140) can be inserted between the two adjacent stator portions (150, 151).

2. A supporting device (100) according to claim 1, wherein the relaxed configuration of the flexible member (140) is a substantially concave configuration.

3. A supporting device (100) according to claim 1 or 2, wherein the operating configuration of the flexible member (140) is a substantially flattened configuration.

4. A supporting device (100) according to any of the preceding claims, wherein the inserting configuration of the flexible member is a substantially convex configuration.

5. A supporting device (100) according to any of the preceding claims, wherein the pre-tensioning tool (180) comprises two separate walls (181, 182) and a tightening element (190) arranged such that as it is tightened to the flexible member (140) said separate walls (181, 182) push on opposite edges (141, 142) of the flexible member (140) tending to bringing it into the inserting configuration.

6. A supporting device (100) according to any of the preceding claims, wherein the flexible member (140) has a coupling portion (160) adapted to be at least partially inserted into a gap (170) between adjacent winding coils (120, 121) when in the operating configuration.

7. A supporting device (100) according to claim 5, wherein the tightening element of the pre-tensioning tool (180) is a screw (190) adapted to be screwed on the winding coil coupling portion (160) such that the walls (180, 181) of the pre-tensioning tool (180) push on the flexible member (140).

8. A supporting device (100) according to claims 6 or 7, wherein the winding coil coupling portion (160) is adapted to be always in contact with adjacent winding coils (120, 121).

9. A supporting device (100) according to any claims 6-8, wherein the winding coil coupling portion (160) is movable with respect to the stator portions (150, 151) to adapt to the gap (171) between adjacent winding coils (120, 121).

10. A supporting device (100) according to any of the claims 6-9, wherein the winding coil coupling portion (160) has at least one projection (161, 162) extending outwards to adapt to the gap (171) between adjacent winding coils (120, 121).

11. A method for supporting winding coils (120, 121) in a wind turbine generator, the method comprising the steps of
- providing at least one supporting device (100) according to any of the preceding claims comprising a flexible member (140) that is in a relaxed configuration,
- compressing the flexible member (140) into an inserting configuration such that it can be arranged between two adjacent stator portions (150, 151) through the use of a pre-tensioning tool (180) capable of putting the flexible member (140) in said inserting configuration before being inserted between the two adjacent stator portions (150, 151);
- inserting the flexible member (100) between two adjacent stator portions (150, 151),
- leaving the flexible member (140) between the adjacent stator portions (150, 151) such that it is in an operating configuration in which the flexible member (140) is compressed by the stator portions (150, 151) and the winding coils (120, 121).

12. A method according to claim 11, wherein the flexible member compressing step is carried out by tightening the pre-tensioning tool (180) to the flexible member (140) causing the separate walls (181, 182) of the pre-tensioning tool (180) to push on transverse edges (141, 142) of the flexible member (140) tending to put it into the inserting configuration.

13. A method according to any of the claims 11-12, wherein it further comprises the step of removing the pre-tensioning tool (180) from the flexible member (140) once the latter has been fitted between adjacent stator portions (150, 151) and arranged in the operating configuration.

## Patentansprüche

1. Eine Unterstützungsvorrichtung (100) zur Unterstützung von Wickelspulen (120, 121) in einem Windturbinengenerator, wobei die Vorrichtung (100) ein flexibles Element (140) umfasst, das angepasst ist, um zwischen zwei angrenzenden Statorteilen (150, 151) eines Statorkerns befestigt zu werden, wobei das flexible Element (140) in einer nicht beanspruchten Konfiguration ist, bevor es zwischen zwei angrenzende Statorteile (150, 151) eingeführt wird, und das flexible Element (140) in einer Betriebskonfiguration ist, wenn es zwischen zwei angrenzende Statorteile (150, 151) eingeführt wird, in der das flexible Element (140) durch die Statorteile (150, 151) und die Wickelspulen zusammengedrückt wird, wodurch eine Kraft auf die Wickelspulen (120, 121) zu deren Haltung in im Statorkern gebildeten Schlitzen ausgeübt wird,
**dadurch gekennzeichnet, dass** sie weiterhin folgendes umfasst: ein Vorspannwerkzeug (180), das auf das flexible Element (140) angewendet werden kann, um es in einer Einführungskonfiguration zu bringen, in dem es so zusammengedrückt wird, dass das flexible Element (140) zwischen die zwei angrenzenden Statorteile (150, 151) eingeführt werden kann.

2. Eine Unterstützungsvorrichtung (100) nach Anspruch 1, wobei die nicht beanspruchte Konfiguration des flexiblen Elements (140) eine im Wesentlichen konkave Konfiguration ist.

3. Eine Unterstützungsvorrichtung (100) nach Anspruch 1 oder 2, wobei die Betriebskonfiguration des flexiblen Elements (140) eine im Wesentlichen abgeplattete Konfiguration ist.

4. Eine Unterstützungsvorrichtung (100) nach einem der vorhergehenden Ansprüche, wobei die Einführungskonfiguration des flexiblen Elements eine im Wesentlichen konvexe Konfiguration ist.

5. Eine Unterstützungsvorrichtung (100) nach einem der vorhergehenden Ansprüche, wobei das Vorspannwerkzeug (180) zwei getrennte Wände (181, 182) und ein Anzugselement (190) umfasst, das so angeordnet ist, dass, wenn es zum flexibel Element (140) angezogen wird, die getrennten Wände (181, 182) auf gegenüber liegenden Kanten (141, 142) des flexiblen Elements (140) zusammendrücken, wodurch es tendiert, in die Einführungskonfiguration gebracht zu werden.

6. Eine Unterstützungsvorrichtung (100) nach einem der vorhergehenden Ansprüche, wobei das flexible Element (140) einen Kupplungsteil (160) hat, der angepasst ist, um in der Betriebskonfiguration mindestens teilweise in einen Spalt (170) zwischen angrenzenden Wickelspulen (120, 121) eingeführt zu werden.

7. Eine Unterstützungsvorrichtung (100) nach Anspruch 5, wobei das Anzugselement des Vorspannwerkzeugs (180) eine Schraube (190) ist, die angepasst ist, um auf den Wickelspulenkopplungsteil (160) angeschraubt zu werden, so dass die Wände (180, 181) des Vorspannwerkzeugs (180) auf das flexible Element (140) drücken.

8. Eine Unterstützungsvorrichtung (100) nach den Ansprüchen 6 oder 7, wobei der Wickelspulenkopplungsteil (160) angepasst ist, um stets in Kontakt mit angrenzenden Wickelspulen (120, 121) zu sein.

9. Eine Unterstützungsvorrichtung (100) nach einem der Ansprüche 6-8, wobei der Wickelspulenkopplungsteil (160) bewegbar bezüglich der Statorteile (150, 151) ist zur Anpassung an den Spalt (171) zwischen angrenzenden Wickelspulen (120, 121).

10. Eine Unterstützungsvorrichtung (100) nach einem der Ansprüche 6-9, wobei der Wickelspulenkopplungsteil (160) mindestens einen Vorsprung (161, 162) hat, der sich nach Außen erstreckt zur Anpassung an den Spalt (171) zwischen angrenzenden Wickelspulen (120, 121).

11. Ein Verfahren zur Unterstützung von Wickelspulen (120, 121) in einem Windturbinengenerator, wobei das Verfahren folgende Schritte umfasst
- bereitstellen von mindestens einer Unterstützungsvorrichtung (100) nach einem der vorhergehenden Ansprüche umfassend ein flexibles Element (140), das in einer nicht beanspruchten Konfiguration ist,
- zusammendrücken des flexiblen Elements (140) in eine Einführungskonfiguration, so dass es zwischen zwei angrenzenden Statorteilen (150, 151) durch den Einsatz von einem Vorspannwerkzeug (180) angeordnet werden kann, welches das flexible Element (140) in die Einführungskonfiguration bringen kann, bevor es zwischen die zwei angrenzende Statorteile (150, 151) eingeführt wird;
- einführen des flexiblen Elements (100) zwischen zwei angrenzende Statorteile (150, 151),
- ermöglichen, dass das flexible Element (140) zwischen den angrenzenden Statorteilen (150, 151) bleibt, so dass es in einer Betriebskonfiguration ist, in der das flexible Element (140) durch die Statorteile (150, 151) und die Wickelspulen (120, 121) zusammengedrückt wird.

12. Ein Verfahren nach Anspruch 11, wobei der Schritt, in dem das flexible Element zusammengedrückt wird, dadurch durchgeführt wird, dass das Vorspannwerkzeug (180) zum flexiblen Element (140) angezogen wird, was das Drücken durch die getrennten Wände (181, 182) des Vorspannwerkzeugs (180) auf Querkanten (141, 142) des flexiblen Elements (140) hervorbringt, wodurch es tendiert, in die Einführungskonfiguration gebracht zu werden.

13. Ein Verfahren nach einem der Ansprüche 11-12, wobei es weiterhin den Schritt umfasst, in dem das Vorspannwerkzeug (180) vom flexiblen Element (140) entfernt wird, nachdem das Letztere zwischen angrenzenden Statorteilen (150, 151) eingesetzt und in der Betriebskonfiguration angeordnet worden ist.

## Revendications

1. Un dispositif de support (100) pour supporter des bobines d'enroulement (120, 121) dans un générateur d'éolienne, le dispositif (100) comprenant un élément flexible (140) adapté pour être attaché entre deux parties de stator (150, 151) adjacentes d'un noyau de stator, l'élément flexible (140) étant dans une configuration relaxée avant d'être inséré entre deux parties de stator (150, 151) adjacentes, et l'élément flexible (140) étant dans une configuration de fonctionnement lorsqu'il est inséré entre deux parties de stator (150, 151) adjacentes dans laquelle l'élément flexible (140) est compressé par les parties de stator (150, 151) et les bobines d'enroulement (120, 121), par lequel une force est appliquée sur les bobines d'enroulement afin de les retenir dans des encoches formées dans le noyau de stator,
**caractérisé en ce qu'**il comprend en outre un outil de pré-contrainte (180) qui peut être appliqué à l'élément flexible (140) pour lui donner une configuration d'insertion en le compressant de façon que l'élément flexible (140) peut être inséré entre les deux parties de stator (150, 151) adjacentes.

2. Un dispositif de support (100) selon la revendication 1, dans lequel la configuration relaxée de l'élément flexible (140) est une configuration essentiellement concave.

3. Un dispositif de support (100) selon la revendication 1 ou 2, dans lequel la configuration de fonctionnement de l'élément flexible (140) est une configuration essentiellement aplatie.

4. Un dispositif de support (100) selon l'une quelconque des revendications précédentes, dans lequel la configuration de fonctionnement de l'élément flexible est une configuration essentiellement convexe.

5. Un dispositif de support (100) selon l'une quelconque des revendications précédentes, dans lequel l'outil de pré-contrainte (180) comprend deux parois séparées (181, 182) et un élément de serrage (190) disposé de façon que lorsqu'il est serré à l'élément flexible (140) lesdites parois séparées (181, 182) pressent sur des bords opposés (141, 142) de l'élément flexible (140) par lequel il tend à prendre la configuration d'insertion.

6. Un dispositif de support (100) selon l'une quelconque des revendications précédentes, dans lequel l'élément flexible (140) a une partie de couplage (160) adaptée pour être insérée au moins en partie dans un écart (170) entre des bobines d'enroulement adjacentes (120, 121) lorsqu'il est dans la configuration de fonctionnement.

7. Un dispositif de support (100) selon la revendication 5, dans lequel l'élément de serrage de l'outil de pré-contrainte (180) est une vis (190) adaptée pour être visée sur la partie de couplage (160) de bobine d'enroulement de façon que les parois (180, 181) de l'outil de pré-contrainte (180) pressent sur l'élément flexible (140).

8. Un dispositif de support (100) selon les revendications 6 ou 7, dans lequel la partie de couplage (160) de bobine d'enroulement est adaptée pour être toujours en contact avec des bobines d'enroulement (120, 121) adjacentes.

9. Un dispositif de support (100) selon l'une quelconque des revendications 6-8, dans lequel la partie de couplage (160) de bobine d'enroulement peut être mue par rapport aux parties de stator (150, 151) pour l'adaptation à l'écart (171) entre des bobines d'enroulement (120, 121) adjacentes.

10. Un dispositif de support (100) selon l'une quelconque des revendications 6-9, dans lequel la partie de couplage (160) de bobine d'enroulement a au moins une saillie (161, 162) s'étendant vers l'extérieur pour l'adaptation à l'écart (171) entre des bobines d'enroulement (120, 121) adjacentes.

11. Un procédé de support de bobines d'enroulement (120, 121) dans un générateur d'éolienne, le procédé comprenant les étapes de
- fournir au moins un dispositif de support (100) selon l'une quelconque des revendications précédentes comprenant un élément flexible (140) qui est dans une configuration relaxée,
- compresser l'élément flexible (140) pour lui donner une configuration d'insertion de façon qu'il peut être disposé entre deux parties de stator (150, 151) adjacentes moyennant l'utilisation d'un outil de pré-contrainte (180) qui peut mettre l'élément flexible (140) dans ladite configuration d'insertion avant d'être inséré entre les deux parties de stator (150, 151) adjacentes ;
- insérer l'élément flexible (100) entre deux parties de stator adjacentes (150, 151),
- laisser l'élément flexible (140) entre les parties de stator (150, 151) adjacentes de façon qu'il est dans une configuration de fonctionnement dans laquelle l'élément flexible (140) est compressé par les parties de stator (150, 151) et les bobines d'enroulement (120, 121).

12. Un procédé selon la revendication 11, dans lequel l'étape de compression de l'élément flexible est effectuée en serrant l'outil de pré-contrainte (180) à l'élément flexible (140) ce qui fait que les parois séparées (181, 182) de l'outil de pré-contrainte (180) poussent sur des bords transversaux (141, 142) de l'élément flexible (140) ce qui tend à lui donner la configuration d'insertion.

13. Un procédé selon l'une quelconque des revendications 11-12, comprenant en outre l'étape d'enlever l'outil de pré-contrainte (180) de l'élément flexible (140) une fois que ce dernier a été ajusté entre des parties de stator adjacentes (150, 151) et disposé dans la configuration de fonctionnement.
